# EUROPEAN PATENT APPLICATION

(11) **EP 4 815 151 A1**
(43) Date of publication of application: **30.09.2026**
(21) Application number: 24894058.7
(22) Date of filing: 13.11.2024
(51) Int. Cl.: H01M 50/291, H01M 10/54, H01M 50/213, H01M 50/503, H01M 50/507

(54) **BATTERY PACK AND METHOD FOR REPLACING SECONDARY BATTERY CELL THEREOF**

(30) Priority: 22.11.2023 JP 2023198493
(71) Applicant: Panasonic Intellectual Property Management Co., Ltd., Kadoma-shi, Osaka 571-0057 (JP)
(72) Inventor: FUKUDA, Shinsuke, Osaka 571-0057 (JP); SHUKE, Takeshi, Osaka 571-0057 (JP)
(74) Representative: Eisenführ Speiser
(86) International application number: PCT/JP2024/040267
(87) International publication number: WO 2025/110067

(57) **Abstract**

A battery pack includes: secondary battery cells each having a cell end face; a battery holder storing the secondary battery cells; and lead plates each of which is connected to the cell end face of the secondary battery cell stored in the battery holder. The battery holder includes a main body holder including storage cylinders each of which stores the secondary battery cell, the storage cylinders each having both ends that are opened, and a lid holder that closes at least a part of an open region of the main body holder. The lid holder is separable into sub-holders. Each of the sub-holders has an electrode window that is opened to partially expose the cell end face of the secondary battery cell, and the cell end face is connected to one of the lead plates through the electrode window.

## Description

### TECHNICAL FIELD

The present disclosure relates to a battery pack and a method for replacing a secondary battery cell of the battery pack.

### BACKGROUND ART

A battery pack in which a large number of secondary battery cells are connected in series and in parallel is used as a power source for an assist bicycle or a power source for a portable electric device such as an electric cleaner or an electric power tool, or as a backup power source for a server or a power source device for home use, business use, or factory use in stationary power storage applications, and is also used as a power source for driving an electric scooter, an electric cart, or a vehicle such as a hybrid vehicle or an electric vehicle.

On the other hand, from the viewpoint of social demands such as reduction of environmental load and realization of a sustainable society, products produced in consideration of recycling, reuse, and reduction of resources are required. Also for the battery pack, there is a demand for a mechanism capable of reusing usable components and replacing degraded components.

However, there is a problem that the conventional battery pack is not easily reused. For example, in a battery pack in which a plurality of secondary battery cells are stored in a battery holder and cell end faces of the secondary battery cells are welded to lead plates by using the lead plates, to take out some of the secondary battery cells from the battery holder and replace the secondary battery cells for reuse, it is necessary to temporarily remove all the lead plates from the cell end faces of the secondary battery cells and then remove the secondary battery cells from the battery holder. This work takes time and effort, and particularly as the number of secondary battery cells and the number of lead plates increase, the number of positions where the lead plates welded to the end faces of the secondary battery cells are removed increases, and there is a problem that the amount of work increases.

### Citation List

### Patent Literature

PTL 1: Japanese Patent No. 4993935

### SUMMARY OF THE INVENTION

One object of the present disclosure is to provide a battery pack from which a secondary battery cell is replaceable, and a method for replacing the secondary battery cell. Another object of the present disclosure is to provide a battery pack capable of reducing the amount of work for removing a lead plate from an end face of a secondary battery cell, and a method for replacing the secondary battery cell. Note that the description of these objects and issues in the present disclosure does not preclude the existence of other objects and issues. One aspect of the present disclosure is not required to solve all of these issues. Furthermore, issues other than these can be extracted from the description, drawings, and claims of the present disclosure.

A battery pack according to an aspect of the present disclosure including: a plurality of secondary battery cells each having a cell end face; a battery holder storing the plurality of secondary battery cells; and a plurality of lead plates each of which is connected to the cell end face of a corresponding one of the plurality of secondary battery cells stored in the battery holder, wherein the battery holder includes a main body holder including a plurality of storage cylinders each of which stores a corresponding one of the plurality of secondary battery cells, the plurality of storage cylinders each having both ends that are opened, and a lid holder that closes at least a part of an open region of the main body holder, the lid holder is configured to be separable into a plurality of sub-holders, each of the plurality of sub-holders has an electrode window that is opened to partially expose the cell end face of a corresponding one of the plurality of secondary battery cells, and the cell end face is connected to one of the plurality of lead plates through the electrode window.

A method for replacing a secondary battery cell of a battery pack according to another aspect, the method including: a step of preparing a battery pack including a plurality of secondary battery cells each having a cell end face, a battery holder storing the plurality of secondary battery cells, and a plurality of lead plates each of which is connected to the cell end face of a corresponding one of the plurality of secondary battery cells stored in the battery holder, the battery holder including a main body holder including a plurality of storage cylinders each of which stores a corresponding one of the plurality of secondary battery cells, the plurality of storage cylinders each having both ends of that are opened, and a lid holder that closes at least a part of an open region of the main body holder, the lid holder being configured to be separable into a plurality of sub-holders, each of the plurality of sub-holders having an electrode window that is opened to partially expose the cell end face a corresponding one of the plurality of secondary battery cells, and the cell end face being connected to one of the plurality of lead plates through the electrode window; a step of specifying at least one secondary battery cell to be replaced among the plurality of secondary battery cells; a step of removing, from the lid holder, a lead plate connected to the at least one secondary battery cell to be replaced among the plurality of lead plates, and separating, from the lid holder, a sub-holder to which the removed lead plate is fixed among the plurality of sub-holders; a step of removing, from the main body holder, the at least one secondary battery cell to be replaced; a step of inserting another secondary battery cell into the main body holder instead of the at least one secondary battery cell to be replaced; a step of fixing another sub-holder to the lid holder instead of the separated sub-holder; and a step of fixing another lead plate instead of the removed lead plate through the electrode window of the another sub-holder.

Therefore, when it is desired to remove some of the secondary battery cells from the battery pack for recycling or the like, it is sufficient to remove only the sub-holders that close the cell end faces of the corresponding secondary battery cells, and it is possible to simplify disassembly work by reducing the number of positions where the cell end faces of the secondary battery cells and the lead plates are disconnected.

### BRIEF DESCRIPTION OF THE DRAWINGS

Fig. 1 is a perspective view illustrating a battery pack according to a first exemplary embodiment.
Fig. 2 is an exploded perspective view of the battery pack illustrated in Fig. 1.
Fig. 3 is an exploded perspective view illustrating a state in which a sub-holder is separated from the battery pack illustrated in Fig. 1.
Fig. 4 is an exploded perspective view illustrating a state in which a new sub-holder is to be attached to the battery pack illustrated in Fig. 3.
Fig. 5 is a perspective view illustrating a battery pack according to a comparative example.
Fig. 6 is an exploded perspective view of the battery pack illustrated in Fig. 5.
Fig. 7 is a perspective view illustrating a battery pack according to a second exemplary embodiment.
Fig. 8 is an exploded perspective view of the battery pack illustrated in Fig. 7.
Fig. 9 is an exploded perspective view illustrating a state in which a sub-holder is separated from the battery pack illustrated in Fig. 7.
Fig. 10 is a perspective view illustrating a battery pack according to a third exemplary embodiment.
Fig. 11 is an exploded perspective view of the battery pack illustrated in Fig. 10.
Fig. 12 is a perspective view illustrating a battery pack according to a fourth exemplary embodiment.
Fig. 13 is an exploded perspective view of the battery pack illustrated in Fig. 12.
Fig. 14 is a perspective view of a lid holder on the back side of Fig. 13.
Fig. 15 is a perspective view illustrating a battery pack according to a fifth exemplary embodiment.
Fig. 16 is an exploded perspective view of the battery pack illustrated in Fig. 15.
Fig. 17 is an exploded perspective view illustrating a state in which a sub-holder is separated from the battery pack illustrated in Fig. 15.
Fig. 18 is an exploded perspective view of a lid holder illustrated in Fig. 16.
Fig. 19 is a perspective view illustrating a lid holder of a battery pack according to a modified example.
Fig. 20 is a perspective view illustrating a battery pack according to a sixth exemplary embodiment.

### DESCRIPTION OF EMBODIMENT

Exemplary embodiments of the present disclosure may also be specified by the following configurations and features.

In a battery pack according to another aspect of the present disclosure, in the above-described aspect, the battery holder holds the plurality of secondary battery cells stacked in a plurality of stages, each of the plurality of sub-holders is extended in a stacking direction of the plurality of secondary battery cells, and the plurality of sub-holders are arranged in a direction intersecting an extending direction of the sub-holders. With the above-described configuration, since the sub-holders are extended in the stacking direction of the secondary battery cells, to take out some of the secondary battery cells, it is sufficient to remove only the sub-holders covering columns including the secondary battery cells, and it is possible to balance the number of sub-holders with the number of secondary battery cells to be disassembled and to achieve a lean configuration.

In a battery pack according to another aspect of the present disclosure, in any one of the above-described aspects, the lid holder is a pair of lid holders that respectively close both sides of an open surface of the main body holder.

Further, in a battery pack according to another aspect of the present disclosure, in any one of the above-described aspects, the battery pack is formed in a size covering exterior cans of the plurality of secondary battery cells in a state where the lid holder and the main body holder are joined. With the above-described configuration, the plurality of secondary battery cells can be sandwiched and held by the lid holder and the main body holder.

Furthermore, in a battery pack according to another aspect of the present disclosure, in any one of the above-described aspects, the lid holder includes a breakable holder connecting part connecting adjacent sub-holders of the plurality of sub-holders. With the above-described configuration, as an integrated lid holder in which the sub-holders are coupled in advance, it is possible to remove the secondary battery cell by breaking only the sub-holder at a portion where the secondary battery cell to be replaced is stored at the time of taking out the secondary battery cell while facilitating assembly work and the like.

Still further, in a battery pack according to another aspect of the present disclosure, in any one of the above-described aspects, the lid holder is configured to be separable into a plurality of portions, as the plurality of sub-holders, each of which corresponds to the cell end face of a corresponding one of the plurality of secondary battery cells, and each of the plurality of sub-holders is formed to be larger than an outer shape of the cell end face. With the above configuration, it is possible to remove the secondary battery cell by removing only the corresponding sub-holder without removing the lid holder itself from the main body holder.

Furthermore, in a battery pack according to another aspect of the present disclosure, in any one of the above-described aspects, the lid holder includes the plurality of sub-holders as breakable thin regions. With the above-described configuration, the lid holder is integrated to facilitate the assembly work and the like, and at the time of taking out the secondary battery cell, the secondary battery cell can be removed by breaking and separating only a thin region of a portion where the secondary battery cell to be replaced is stored.

Furthermore, in a battery pack according to another aspect of the present disclosure, in any one of the above-described aspects, each of the plurality of lead plates includes a region corresponding to the electrode window, the region being bent in a stepwise manner. With the above-described configuration, the lead plates can be connected to the cell end faces of the secondary battery cells through the electrode windows of the lid holder.

Hereinafter, exemplary embodiments of the present disclosure will be described with reference to the drawings. However, the exemplary embodiments described below are examples for embodying the technical idea of the present disclosure, and the present disclosure is not limited to the exemplary embodiments described below. Moreover, in the present specification, members indicated in the claims are not necessarily limited to the members described in the exemplary embodiments. In particular, the dimensions, materials, shapes, relative arrangements, and the like of components described in the exemplary embodiments are not intended to limit the scope of the present disclosure exclusively unless otherwise specified, and are merely illustrative examples. The sizes and positional relationships of members illustrated in each drawing may be exaggerated to clarify the explanation. In the following description, the same names and reference marks indicate the same or similar members, so that detailed description thereof will be omitted as appropriate. Additionally, each element constituting the present disclosure may include an aspect in which a plurality of elements are constituted by one member and the one member serves as the plurality of elements, or conversely, a function of one member may be shared and implemented by a plurality of members.

A battery pack of the present disclosure can be used as a power source for driving a moving body such as an assist bicycle, an electric cart, or an electric scooter, as a power source for a portable electric device such as a wireless device, an electric cleaner, or an electric tool, as a backup power source for a server or a power source device for home use, business use, or factory use in stationary power storage, or as a power source for driving a vehicle such as a hybrid vehicle or an electric vehicle. As an exemplary embodiment of the present invention, a battery pack that is used as a power source for driving an assist bicycle will be described hereinafter as an example.

### [First exemplary embodiment]

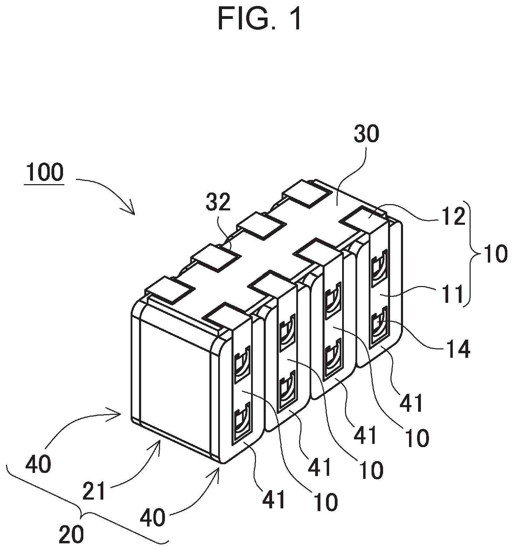

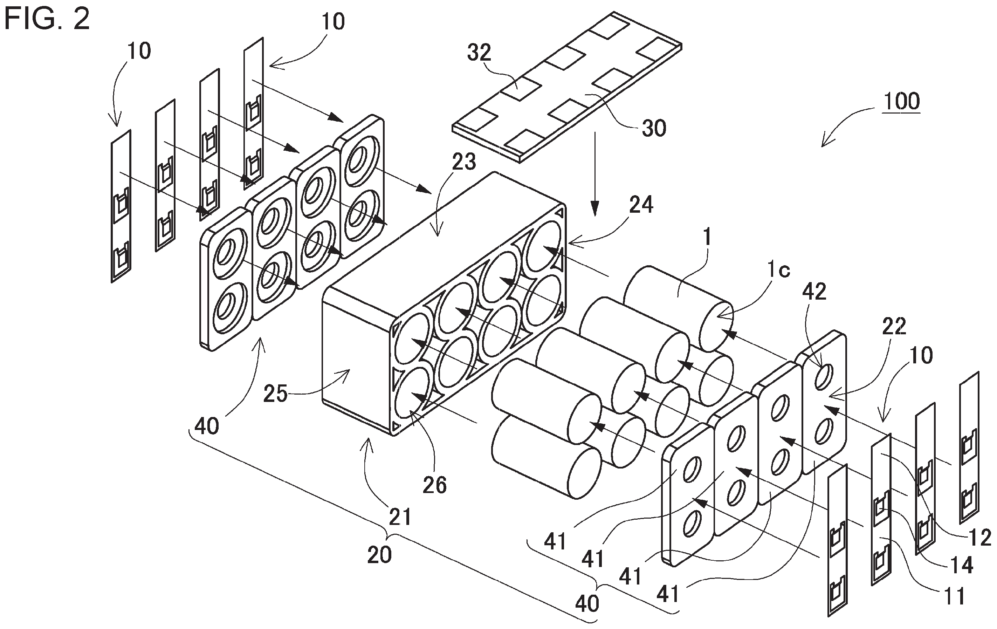

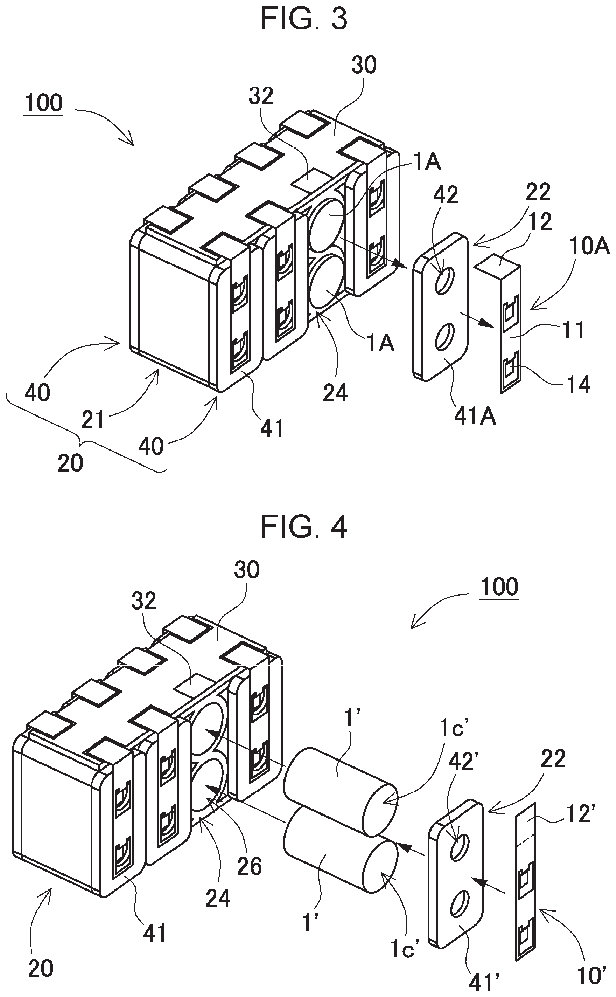

Figs. 1 to 4 illustrate battery pack 100 according to a first exemplary embodiment of the present disclosure. In these drawings, Fig. 1 is a perspective view illustrating battery pack 100 according to the first exemplary embodiment, Fig. 2 is an exploded perspective view of battery pack 100 illustrated in Fig. 1, Fig. 3 is an exploded perspective view illustrating a state in which sub-holder 41 is separated from battery pack 100 illustrated in Fig. 1, and Fig. 4 is an exploded perspective view illustrating a state in which new sub-holder 41 is to be attached to battery pack 100 illustrated in Fig. 3. Battery pack 100 illustrated in these drawings includes battery holder 20, a plurality of secondary battery cells 1, a plurality of lead plates 10, and circuit substrate 30. Each secondary battery cell 1 has cell end face 1c. Each lead plate 10 is connected to cell end faces 1c of the plurality of secondary battery cells 1 stored in battery holder 20.

### (Battery holder 20)

Battery holder 20 stores and holds the plurality of secondary battery cells 1. Battery holder 20 includes main body holder 21 and lid holder 40. Main body holder 21 is provided with storage cylinders 26 storing the plurality of secondary battery cells 1. Both ends of each storage cylinder 26 are opened on side faces of main body holder 21. Lid holder 40 closes at least a part of an open region of main body holder 21.

Lid holder 40 is configured to be capable of being divided into a plurality of sub-holders 41. Each sub-holder 41 has electrode window 42 opened to partially expose a corresponding one of cell end faces 1c of secondary battery cells 1. Electrode window 42 has an opening area smaller than cell end face 1c of secondary battery cell 1. Meanwhile, as illustrated in Fig. 2, a stepped portion is formed around electrode window 42. By making the inner diameter of the stepped portion substantially the same as or slightly larger than cell end face 1c, a part of an end edge of secondary battery cell 1 can be inserted into the stepped portion and positioned.

Meanwhile, each of cell end faces 1c of secondary battery cells 1 is connected to any one of the plurality of lead plates 10 via a corresponding one of electrode windows 42. With such a configuration, when it is desired to remove some of the secondary battery cells from battery pack 100 for recycling or the like, it is sufficient to remove only sub-holders 41 that close cell end faces of the corresponding secondary battery cells. In other words, it is not necessary to disconnect the cell end faces and lead plates 10 for all the secondary battery cells included in battery holder 20. As a result, the number of positions where the cell end faces and lead plates 10 are disconnected is reduced, and the disassembly work is simplified.

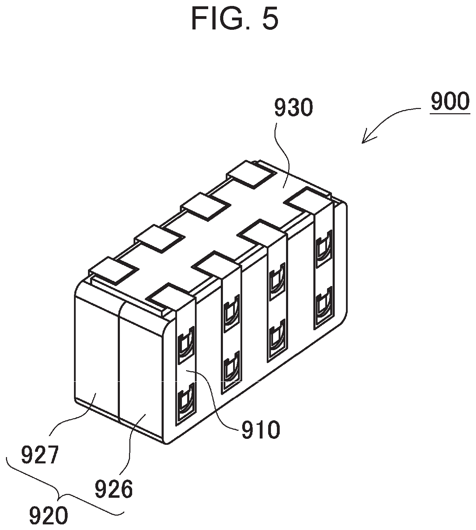

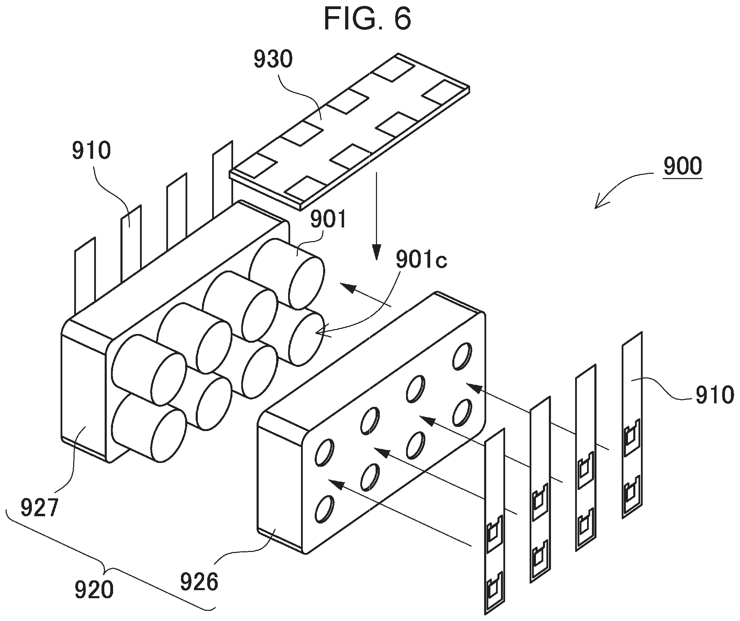

In general, a battery pack has a configuration in which a plurality of secondary battery cells are stored in a battery holder, and cell end faces of the secondary battery cells are welded to a lead plate by using the lead plate. From the viewpoint of social demands such as reduction of environmental load and realization of a sustainable society in recent years, a mechanism capable of reusing usable components and replacing degraded components in consideration of recycling, reuse, and reduction is required. However, there is a problem that the conventional battery pack is not easily reused. Specifically, as illustrated in a perspective view of Fig. 5 and an exploded perspective view of Fig. 6, in battery pack 900, battery holder 920 is divided into first holder 926 and second holder 927, and electrodes on cell end faces 901c at both ends of each secondary battery cell 901 are welded to lead plate 910 in a state where the plurality of secondary battery cells 901 are sandwiched and stored from both sides. Circuit substrate 930 is disposed on an upper surface or the like. In this type of battery pack 900, if some of secondary battery cells 901 are taken out from battery holder 920 and replaced for reuse, battery holder 920 cannot be disassembled unless all lead plates 910 are removed from the end faces of secondary battery cells 901, and secondary battery cells 901 cannot be removed from battery holder 920. The work of removing all the lead plates takes time and effort, and in particular, as the number of secondary battery cells and the number of lead plates increase, the number of positions where the lead plates welded to the end faces of the secondary battery cells are removed increases, and there is a problem that the amount of work increases.

On the other hand, in battery pack 100 according to the present exemplary embodiment, as described above, lid holder 40 is configured to be capable of being divided into the plurality of sub-holders 41, and electrode window 42 for partially exposing cell end face 1c of secondary battery cell 1 is opened in each sub-holder 41. By adopting such a configuration, if only sub-holder 41 that closes cell end face 1c of secondary battery cell 1 to be replaced is removed, access to secondary battery cell 1 to be replaced becomes possible, and the disassembly work can be simplified and labor saving can be achieved. Details will be described below.

### (Secondary battery cells 1)

The plurality of secondary battery cells 1 are arranged in battery holder 20 in which cell end faces 1c of respective secondary battery cells 1 are arranged in the same plane. A secondary battery cell having a cylindrical or a square outer shape can be used as each secondary battery cell 1. In the example illustrated in Figs. 1, 2, and the like, cylindrical secondary battery cells 1 are horizontally oriented and arranged in a lattice pattern. The number and arrangement of secondary battery cells are not limited to this example, and any number and arrangement can be appropriately adopted. For example, cylindrical secondary battery cells may be arranged in a staggered manner.

Each secondary battery cell 1 has positive and negative electrodes. Preferably, one of the positive electrode and the negative electrode is disposed on one of cell end faces of secondary battery cell 1, and the other is disposed on the other cell end face. In the example illustrated in Fig. 2 and the like, the negative electrode is disposed on the can bottom side of an exterior can of each secondary battery cell 1, and the exterior can serves as the negative electrode. For this type of secondary battery cell 1, a known secondary battery such as a lithium ion secondary battery, a nickel hydrogen battery, or a nickel cadmium battery can be appropriately used.

### (Main body holder 21)

Battery holder 20 includes main body holder 21 and lid holder 40. Main body holder 21 is provided with a plurality of storage cylinders 26 storing the plurality of secondary battery cells 1. The plurality of storage cylinders 26 are stacked vertically and horizontally. This makes it possible for battery holder 20 to hold the plurality of secondary battery cells 1 stacked in a plurality of stages. In the example illustrated in Fig. 2, a total of eight storage cylinders 26 are stacked in two rows and four columns, but the number of stacked storage cylinders 26 and the layout are not limited to this configuration. Open ends of respective storage cylinders 26 are arranged in the same plane. Both ends of each storage cylinder 26 are opened on one surface of main body holder 21. In the present disclosure, the one surface of main body holder 21 is referred to as open surface 24, and a surface intersecting open surface 24 is referred to as peripheral surface 25. In the example illustrated in Fig. 2, lid holder 40 is stacked on each open surface 24 of main body holder 21. That is, battery holder 20 includes three pieces, two lid holders 40 and one main body holder 21 sandwiched between the two lid holders.

Each storage cylinder 26 has a cylindrical shape with both ends opened, and secondary battery cell 1 having the cylindrical exterior can is insertable from either side. The inside of each storage cylinder 26 is formed in a size capable of storing secondary battery cell 1. Preferably, as illustrated in Fig. 2 and the like, the inside of each storage cylinder 26 is formed in a cylindrical shape into which the cylindrical exterior can of secondary battery cell 1 can be inserted so that cylindrical secondary battery cell 1 can be stored.

In addition, main body holder 21 has, on the upper surface thereof, a substrate arrangement surface 23 on which circuit substrate 30 is disposed. A thickness of main body holder 21, that is, a width of peripheral surface 25 is shorter than a length of the exterior can of secondary battery cell 1. This makes it possible for secondary battery cell 1 to partially protrude from both sides of main body holder 21 in a state where secondary battery cell 1 is inserted into storage cylinder 26 of main body holder 21. Main body holder 21 is made of a thermoplastic resin such as polycarbonate, polypropylene, polybutylene terephthalate, modified polyphenylene ether, ABS, or PPS. Main body holder 21 may be divided into a plurality of parts. The direction in which main body holder 21 is divided may be vertical and horizontal or a thickness direction.

### (Lid holder 40)

Lid holder 40 closes at least a part of the open region of main body holder 21. In the example illustrated in Fig. 2, battery holder 20 includes a pair of lid holders 40 that respectively close both sides of open surface 24 of main body holder 21. Secondary battery cells 1 are inserted into respective storage cylinders 26 of main body holder 21, and lid holders 40 respectively close open surfaces 24 of main body holder 21 in a state where secondary battery cells 1 partially protrude from both sides of main body holder 21. Similarly to main body holder 21, this lid holder 40 is made of a thermoplastic resin such as polycarbonate, polypropylene, polybutylene terephthalate, modified polyphenylene ether, ABS, or PPS. By using the same material or material of the same system for lid holder 40 and main body holder 21, it is possible to obtain an advantage that main body holder 21 and lid holder 40 can be easily fixed. However, lid holder 40 and main body holder 21 may be made of different materials.

To fix lid holder 40 and main body holder 21, a known method such as a special precision screw, fitting with a claw shape, press-fitting a pin shape in a holder into a hole formed in another holder, an adhesive, heat welding, or ultrasonic welding can be appropriately used. Further, to make it easier to remove sub-holders 41 from main body holder 21 at a later date, it is preferable to fix lid holder 40 to main body holder 21 at separated positions rather than across the entire joint surface between lid holder 40 and main body holder 21.

### (Sub-holders 41)

Lid holder 40 is configured to be capable of being divided into the plurality of sub-holders 41. In the example illustrated in Figs. 3 and 4, lid holder 40 includes four sub-holders 41. Four sub-holders 41 are arranged in the same plane on open surface 24 of main body holder 21. A surface of each sub-holder 41 on which lead plate 10 is disposed is referred to as lead arrangement surface 22. On lead arrangement surface 22, electrode window 42 communicating with cell end face 1c is opened in order to connect lead plate 10 disposed on the outer surface side of battery holder 20 to a terminal of secondary battery cell 1. In the example illustrated in Figs. 3 and 4, each sub-holder 41 is provided with two electrode windows 42 arranged vertically. The number and arrangement pattern of electrode windows 42 are not limited to this configuration, and are appropriately designed according to the shape of each lead plate 10, a connection pattern of secondary battery cells 1, and the like.

Each sub-holder 41 is extended in a stacking direction of the plurality of secondary battery cells 1. In the examples illustrated in Figs. 3 and 4, each sub-holder 41 is formed in a vertically long rectangular shape. In addition, the plurality of sub-holders 41 are arranged side by side in a direction intersecting an extending direction of sub-holders 41. As described above, since sub-holders 41 are extended in the stacking direction of secondary battery cells 1, to take out some of secondary battery cell 1, it is sufficient to remove only sub-holders 41 covering columns including secondary battery cells 1, and it is possible to balance the number of sub-holders 41 with the number of secondary battery cells to be disassembled and to achieve a lean configuration. In the example illustrated in Figs. 3 and 4, vertically oriented sub-holders 41 are arranged in the horizontal direction. Therefore, if only sub-holder 41 in which lead plate 10 connected to secondary battery cell 1 to be replaced is disposed is removed, the secondary battery cell can be removed. In the example illustrated in Fig. 3, second sub-holder 41 from the right among four sub-holders 41 and lead plate 10 are removed, and secondary battery cell 1 to be replaced is removed. In this state, as illustrated in Fig. 4, by inserting another secondary battery cell 1', closing sub-holder 41, and welding cell end face 1c' to a new lead plate 10' through electrode window 42', only secondary battery cell 1 to be replaced can be replaced. Note that sub-holder 41 may be a new sub-holder 41' having the same shape as or compatible with sub-holder 41. In the case of lid holder 40 in which sub-holder 41 is broken, it is preferable to replace sub-holder 41 and use new sub-holder 41'. In this way, while battery holder 20 and circuit substrate 30 of battery pack 100 illustrated in Fig. 1 are useful, only some degraded secondary battery cells 1 can be replaced, and battery pack 100 can be continuously used or can be reused.

In the examples illustrated in Figs. 3 and 4, only one sub-holder 41 is removed from main body holder 21 to replace two secondary battery cells 1, but the present disclosure is not limited to this configuration, and it goes without saying that three or more secondary battery cells can be replaced by removing a plurality of sub-holders. For removal of a lead plate, any method such as peeling of the lead plate or partially cutting of the lead plate can be appropriately used.

In addition, lid holder 40 may be fixed to main body holder 21 in a state where sub-holder 41 is divided in advance, or may be configured such that some of sub-holders 41 can be separated while the plurality of sub-holders 41 are integrally configured.

### (Lead plates 10)

Lead plates 10 are disposed on lead arrangement surface 22 of battery holder 20. As illustrated in Fig. 1, Fig. 2, and the like, lead plates 10 connect electrodes of cell end faces 1c of secondary battery cells 1 to each other, and connect the plurality of secondary battery cells 1 in series or in parallel. In the example illustrated in Fig. 1 and the like, eight lead plates 10 connect eight secondary battery cells 1 to each other. The number of secondary battery cells connected in series and the number of secondary battery cells connected in parallel can be arbitrarily set according to required specifications.

Each lead plate 10 includes base 11 and lead connection piece 12 disposed on a part of this base 11. Lead plate 10 is bent stepwise in a region corresponding to electrode window 42. With such a configuration, lead plate 10 can be connected to cell end face 1c of secondary battery cell 1 through electrode window 42 of lid holder 40. It is preferable that fixing piece 14 be disposed in a portion bent stepwise. For example, a cut is partially made in base 11, and fixing piece 14 bent in an L shape protrudes. In the example illustrated in Fig. 1 and the like, two fixing pieces 14 are arranged on base 11 of each lead plate 10 in a vertical direction. Fixing piece 14 is fixed to cell end face 1c of secondary battery cell 1 by a known method such as spot welding, laser welding, resistance welding, or ultrasonic welding, and electrically connects lead plate 10 and secondary battery cell 1. These lead plates 10 are made of a metal plate having excellent conductivity, such as an aluminum plate, a nickel plate, or a copper plate. The base may be provided with a fuse link part which is melted in response to overcurrent to shut off energization as a path to each fixing piece.

Each lead plate 10 is connected to circuit substrate 30 via lead connection piece 12. Lead connection piece 12 is formed by extending from a part of an upper end of base 11. Preferably, lead connection piece 12 is formed integrally with base 11. As illustrated in Fig. 2, lead plate 10 in which lead connection piece 12 protrudes in the same plane as base 11 is bent as illustrated in Fig. 1 from a state where the lead plate is disposed on lead arrangement surface 22 of battery holder 20, and lead connection piece 12 is brought into contact with connection region 32 of circuit substrate 30. In this state, lead connection piece 12 is fixed to connection region 32. Lead connection piece 12 may be bent in advance with respect to base 11.

### (Circuit substrate 30)

The plurality of secondary battery cells 1 are connected to circuit substrate 30 via lead plates 10 and a bus bar. On circuit substrate 30, a charge and discharge circuit for charging and discharging secondary battery cells 1, a protection circuit for monitoring voltage and temperature of secondary battery cells 1 and stopping currents at a time of abnormality, and the like are mounted. Circuit substrate 30 is formed of a glass epoxy substrate or the like. In addition, a substrate holder may be disposed as a member that holds circuit substrate 30. In addition, as illustrated in Figs. 1 and 2, circuit substrate 30 has a plurality of connection regions 32 that connect to respective lead connection pieces 12 of the plurality of lead plates 10. Each connection region 32 is made of a metal material such as nickel, copper, or aluminum so as to be electrically and mechanically connected to lead connection piece 12 by means of welding or the like. Each connection region 32 may be formed of a metal plate in a plate shape or may be formed in a pattern in a foil shape. Lead connection pieces 12 are connected to respective connection regions 32 using a known connection method such as laser welding, spot welding, resistance welding, or ultrasonic welding. In the present disclosure, connection and welding are used in the sense of including fixation by soldering or brazing material joining in addition to laser welding, ultrasonic vibration welding, and the like.

### (Method for replacing secondary battery cell of battery pack)

In battery pack 100 according to the present embodiment, it is possible to easily replace some of secondary battery cells 1. As a result, in a battery pack in which only some of secondary battery cells 1 constituting the battery pack are degraded and thus unusable, the degraded secondary battery cells are taken out and replaced with new secondary battery cells, whereby the battery pack can be restored to a usable state. In particular, a new battery pack can be constructed by reusing the circuit substrate and battery holder 20 that are still usable. Alternatively, when the secondary battery cells that are still usable among the secondary battery cells taken out from the battery pack are collected to reconstruct another battery pack, the available circuit substrate can be reused. Reusing such members constituting the battery pack is referred to as reconstructing the battery pack in the present disclosure.

Here, a procedure of replacing some or all of the secondary battery cells in the reconstruction of the battery pack will be described with reference to Figs. 1 to 4. At the time of replacement, secondary battery cell 1 to be replaced is specified in advance in battery pack 100 illustrated in Fig. 1. For example, an intermediate potential is measured via lead connection piece 12, and secondary battery cell 1 having a low cell voltage is specified. In this case, among secondary battery cells 1 connected to lead plate 10, a group of secondary battery cells 1 connected in parallel is replaced. Here, an example will be described in which all secondary battery cells 1 connected to one lead plate 10, or two secondary battery cells connected to intermediate lead plate 10 in the example illustrated in Fig. 1 and the like, are replaced.

From battery pack 100 illustrated in Fig. 1, lead plate 10 including secondary battery cell 1 to be replaced is removed from lead arrangement surface 22 of lid holder 40. In the example illustrated in Fig. 3, second lead plate 10A on the front side from the right in the drawing is removed. In order to remove all two secondary battery cells 1 connected to lead plate 10A, lead plate 10 on the back side in Fig. 3 is also removed in the same manner.

Further, among the plurality of sub-holders 41, sub-holder 41 to which lead plate 10 removed from lead arrangement surface 22 has been fixed is separated from lid holder 40. The separation of sub-holder 41 and the removal of lead plate 10 may be performed simultaneously. For example, by separating sub-holder 41, lead plate 10 fixed on this sub-holder 41 can also be forcibly peeled off from secondary battery cell 1 at the same time.

In this state, secondary battery cell 1 can be removed from a surface that is included in open surface 24 of battery holder 20 and from which sub-holder 41 is separated. Therefore, as illustrated in Fig. 3, secondary battery cell 1 held by separated sub-holder 41 and to be replaced is removed from main body holder 21. In Fig. 3, secondary battery cell 1A is removed from the front side of main body holder 21. In addition to secondary battery cell 1A to be replaced, a secondary battery cell held in the same sub-holder 41 may also be removed and replaced. Alternatively, only the secondary battery cell to be replaced may be replaced, and the secondary battery cell held in the same sub-holder as the secondary battery cell to be replaced may be maintained as it is.

Then, instead of secondary battery cell 1 to be replaced, the other secondary battery cell 1' is inserted into main body holder 21. The other secondary battery cell 1' may be a new secondary battery cell, or may be a used secondary battery cell that is obtained by disassembling another battery pack or the like and is still usable.

Instead of separated sub-holder 41, another sub-holder 41' is fixed to lid holder 40. Furthermore, instead of removed lead plate 10, another lead plate 10' is fixed through electrode window 42' of other sub-holder 41'. In addition, lead connection piece 12' at the tip of lead plate 10' is bent and fixed to connection region 32 of circuit substrate 30. In this way, by removing only a lead plate and sub-holder 41 to which a secondary battery cell to be replaced belongs without removing all the lead plates and lid holder 40 as a whole, it is possible to easily replace only a specific secondary battery cell.

### [Second exemplary embodiment]

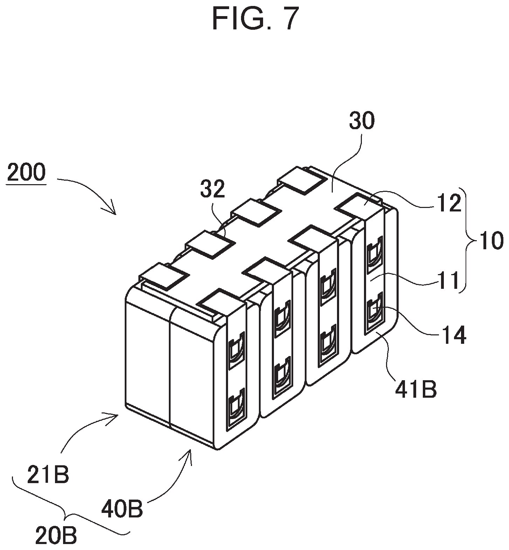

In the first exemplary embodiment described above, the example has been described in which battery holder 20 includes main body holder 21 and two lid holders 40. However, the present disclosure is not limited to the configuration using two lid holders, and one lid holder may be joined to the main body holder. Such an example is illustrated in Figs. 7 to 9 as battery pack 200 according to a second exemplary embodiment. In these drawings, the same members as those in the first exemplary embodiment and the like described above are denoted by the same reference marks, and detailed description thereof is appropriately omitted.

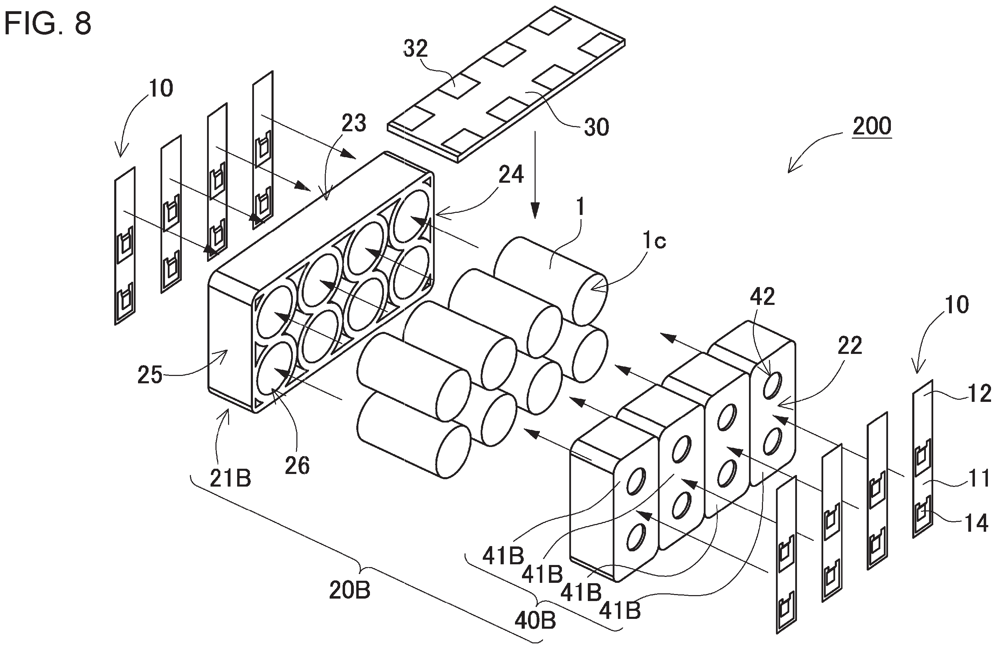

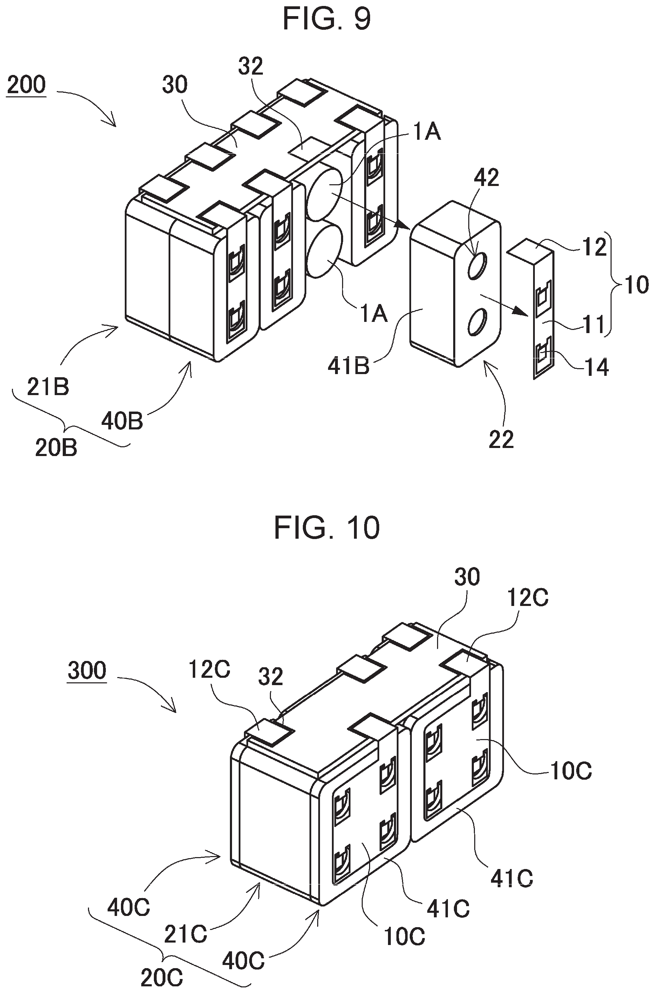

In battery pack 200 illustrated in Figs. 7 and 8, battery holder 20B includes one main body holder 21B and one lid holder 40B. This lid holder 40B is formed in a size covering an exterior can of secondary battery cell 1 in a state where lid holder 40B is joined to main body holder 21B. With such a configuration, a plurality of secondary battery cells 1 can be sandwiched between and held in lid holder 40B and main body holder 21B. To replace secondary battery cell 1, as illustrated in Fig. 9, two lead plates 10 may be removed, and one sub-holder 41B may be separated from main body holder 21B. Here, the thickness of each of lid holder 40B and main body holder 21B is set to about 1/2 of the length of the exterior can of secondary battery cell 1. With this configuration, the work of pulling out secondary battery cells 1 stored in storage cylinders 26 only by about 1/2 of the length of secondary battery cell 1 is sufficient, and thus an advantage that the work can be easily performed is obtained as compared with a state in which almost entire secondary battery cells 1 are stored in storage cylinders 26 as illustrated in Fig. 3.

Lid holder 40B in the second exemplary embodiment is thicker than lid holder 40 in the first exemplary embodiment and is formed to have substantially the same thickness as that of main body holder 21B. However, in the present disclosure, these are referred to as lid holders regardless of the thickness. Similarly, in the second exemplary embodiment, both surfaces of the main body holder are not closed by two lid holders, and only one surface of the main body holder is closed by lid holder 40B. However, the main body holder is referred to as a main body holder in the present disclosure including such an aspect. An electrode window that holds secondary battery cell 1 and exposes cell end face 1c is opened on the back side of main body holder 21B in Fig. 8. This electrode window can have the same shape as that of electrode window 42 of lid holder 40B. In the present disclosure, such an aspect in which the electrode windows are exposed in one side surface (back surface side in Fig. 8) of main body holder 21B and storage cylinders 26 are exposed in the other side surface (front side in Fig. 8) is also used in the sense that they are included in the main body holder in which both ends of each storage cylinder are opened.

### [Third exemplary embodiment]

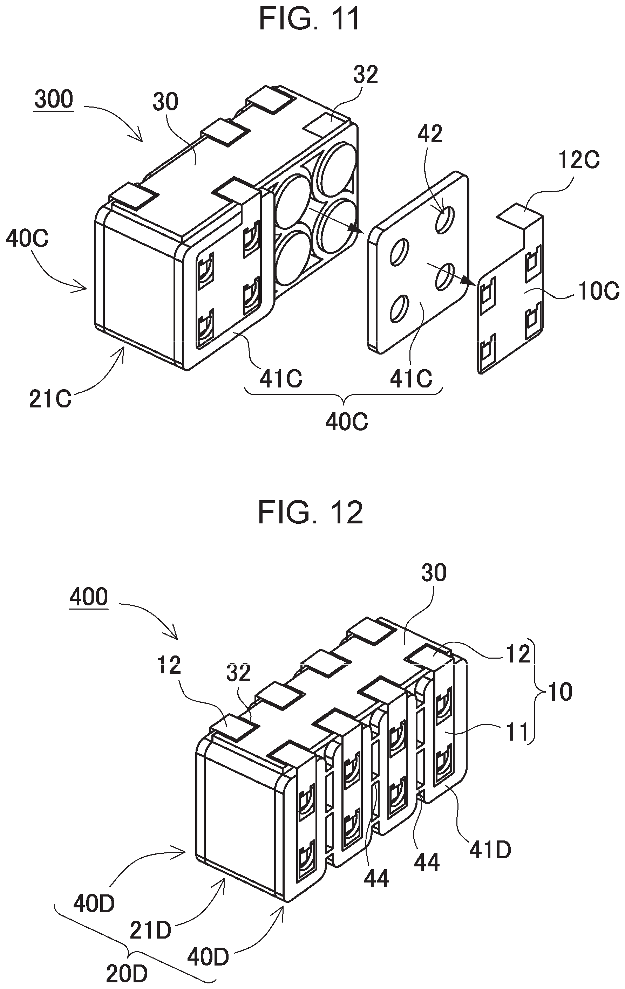

In the above-described example, the configuration in which secondary battery cells 1 are removed from the battery pack and replaced in units of two has been described. However, in the present disclosure, the number of secondary battery cells to be replaced is not limited to two, and secondary battery cells may be replaced in units of three or more, or in units of one. As an example, an example in which secondary battery cells are replaced in units of four is illustrated in Figs. 10 and 11, as battery pack 300 according to a third exemplary embodiment. In these drawings, the same members as those in the first exemplary embodiment and the like described above are denoted by the same reference marks, and detailed description thereof is appropriately omitted.

In battery pack 300 illustrated in Figs. 10 and 11, battery holder 20C includes main body holder 21C and a pair of lid holders 40C that close open surface 24 thereof. Each lid holder 40C includes two sub-holders 41C. Here, each sub-holder 41C is formed in a square shape so as to close cell end faces 1c of a total of four secondary battery cells 1 in two columns and two rows. Accordingly, each sub-holder 41C has four electrode windows 42 opened. In addition, according to this, lead plate 10C disposed on lead arrangement surface 22 is also provided with a total of four fixing pieces 14 in two columns and two rows. Lead connection piece 12C is provided at a corner of an upper end of rectangular base 11.

In this battery pack 300, lead plate 10C and sub-holder 41C to which secondary battery cell 1 to be replaced belongs are separated, and secondary battery cell 1 to be replaced is replaced. Here, four secondary battery cells 1 including secondary battery cell 1 to be replaced are removed from battery holder 20C. Alternatively, only the secondary battery cell to be replaced may be replaced, and the secondary battery cell held in the same sub-holder as the secondary battery cell to be replaced may be maintained as it is.

Then, instead of secondary battery cell 1 to be replaced, another secondary battery cell is inserted into main body holder 21C. Instead of separated sub-holder 41C, another sub-holder is fixed to lid holder 40C. Further, instead of removed lead plate 10C, another lead plate is fixed through electrode window 42 of the other sub-holder. In addition, lead connection piece 12C at the tip of lead plate 10C is bent and fixed to connection region 32 of circuit substrate 30. In this way, only lead plate 10C and sub-holder 41C to which secondary battery cell 1 to be replaced belongs are removed, and the secondary battery cell can be easily replaced.

Here, the example in which the battery holder includes one main body holder and a pair of lid holders as in the first exemplary embodiment has been described, but the present disclosure is not limited thereto, and it is needless to say that the present disclosure can be applied to an example in which the battery holder includes one main body holder and one lid holder as in the second exemplary embodiment.

### [Fourth exemplary embodiment]

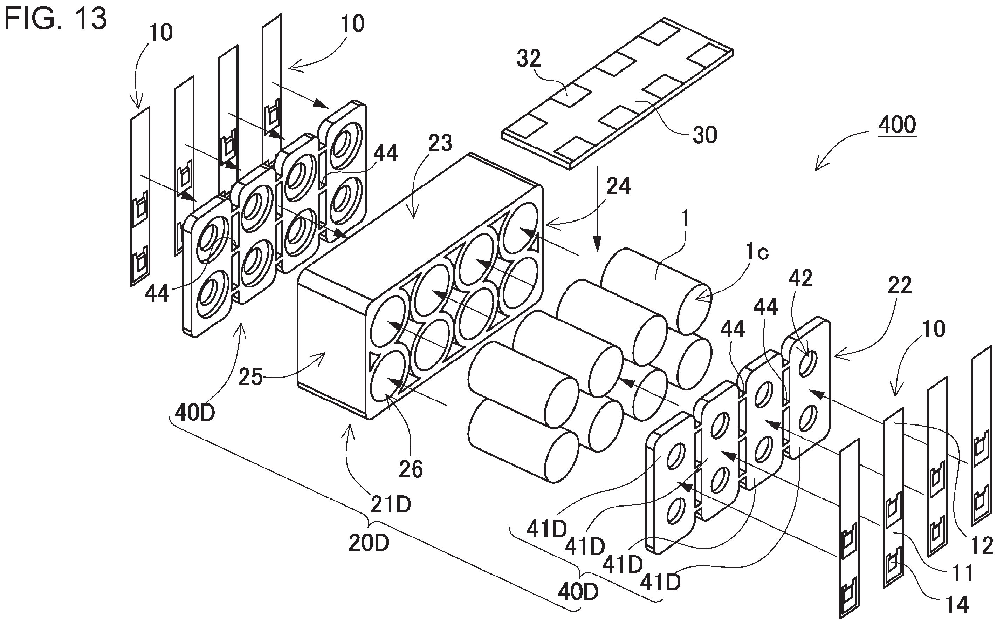

In each of the above-described exemplary embodiments, the example has been described in which the sub-holders constituting the lid holder are fixed to the main body holder in a divided state in advance. However, the present disclosure is not limited to this configuration, and an integrated lid holder may be configured by coupling the sub-holders. Such an example is illustrated in Figs. 12 to 14 as a battery pack 400 according to a fourth exemplary embodiment. In these drawings, the same members as those in the first exemplary embodiment and the like described above are denoted by the same reference marks, and detailed description thereof is appropriately omitted.

In battery pack 400 illustrated in Figs. 12 to 14, battery holder 20D includes main body holder 21D and a pair of lid holders 40D that close open surface 24 thereof. Each lid holder 40D connects adjacent sub-holders 41D to each other with breakable holder connecting part 44. In this way, by using integrated lid holder 40D in which sub-holders 41D are coupled in advance, assembly work and the like can be easily performed. At the time of taking out secondary battery cell 1, secondary battery cell 1 can be removed by breaking only sub-holder 41D at a portion where secondary battery cell 1 to be replaced is stored.

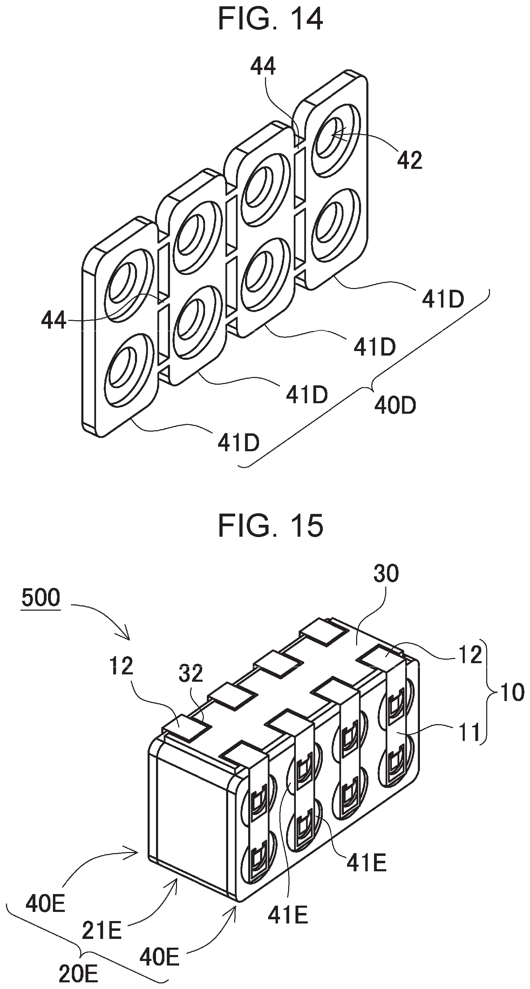

Holder connecting part 44 couples adjacent sub-holders 41D at one or more portions. In the example illustrated in Fig. 14, adjacent sub-holders 41D are coupled to each other at three positions separated from each other. The positions and the number of holder connecting parts 44 are not limited to this example, and the number of holder connecting parts 44 may be less than or equal to 2 or greater than or equal to 4. For example, holder connecting part 44 may be provided only at one intermediate position between adjacent sub-holders 41D in the vertical direction.

Holder connecting part 44 is preferably provided integrally with sub-holder 41D. In the example illustrated in Fig. 14, lid holder 40D in which four sub-holders 41D are coupled by a plurality of holder connecting parts 44 is integrally molded with resin. In addition, holder connecting part 44 may be configured as a thin-walled part having a thickness smaller than that of sub-holder 41D. This makes it easier to perform the work of breaking the connection with sub-holder 41D adjacent to sub-holder 41D to be removed.

### [Fifth exemplary embodiment]

In each of the above-described embodiments, the example in which the lid holder is configured as a coupling body of the sub-holders has been described. However, the present disclosure is not limited to this configuration, and a part of the lid holder may be used as a sub-holder. Such an example is illustrated in Figs. 15 to 18 as a battery pack 500 according to a fifth exemplary embodiment. In these drawings, the same members as those in the first exemplary embodiment and the like described above are denoted by the same reference marks, and detailed description thereof is appropriately omitted.

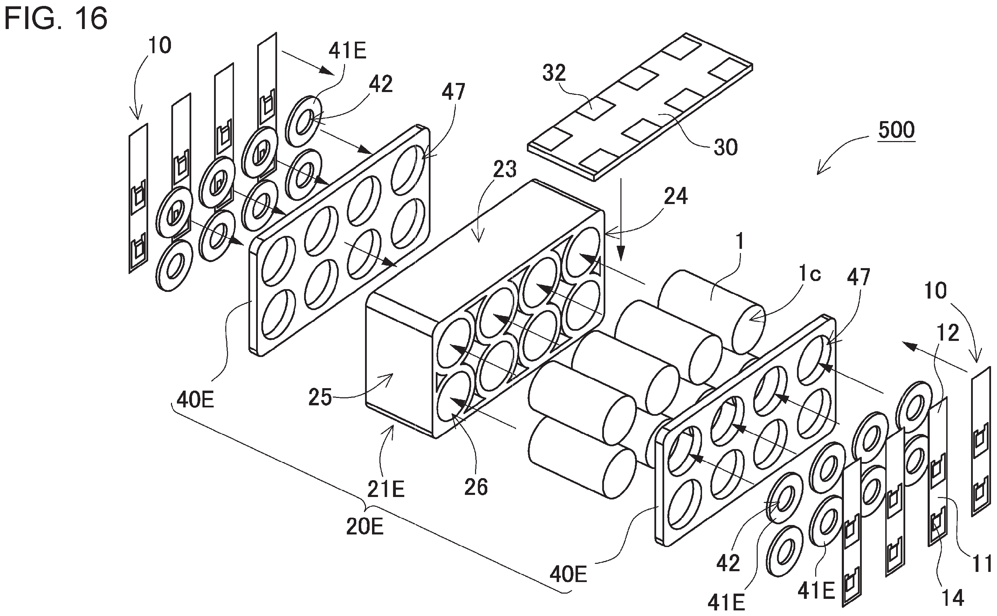

In battery pack 500 illustrated in Figs. 15 to 17, portions of lid holder 40E constituting battery holder 20E that correspond to cell end faces 1c of secondary battery cells 1 are configured to be separable as sub-holders 41E. Each sub-holder 41E is formed to be larger than the outer shape of cell end face 1c. With this configuration, it is possible to remove secondary battery cell 1 by removing only sub-holder 41E corresponding to secondary battery cell 1 to be replaced without removing lid holder 40E itself from main body holder 21E. In the examples illustrated in Figs. 16 to 18, lid holder 40E is formed in a plate shape, and window 47 slightly larger than cell end face 1c is opened at a position corresponding to cell end face 1c of secondary battery cell 1. Each sub-holder 41E having a circular outer shape is fixed to window 47. As a method of fixing sub-holder 41E to window 47 of lid holder 40E, a known fixing method such as press-fitting, fitting, or bonding can be appropriately used. Each sub-holder 41E is formed in an annular shape with electrode window 42 opened.

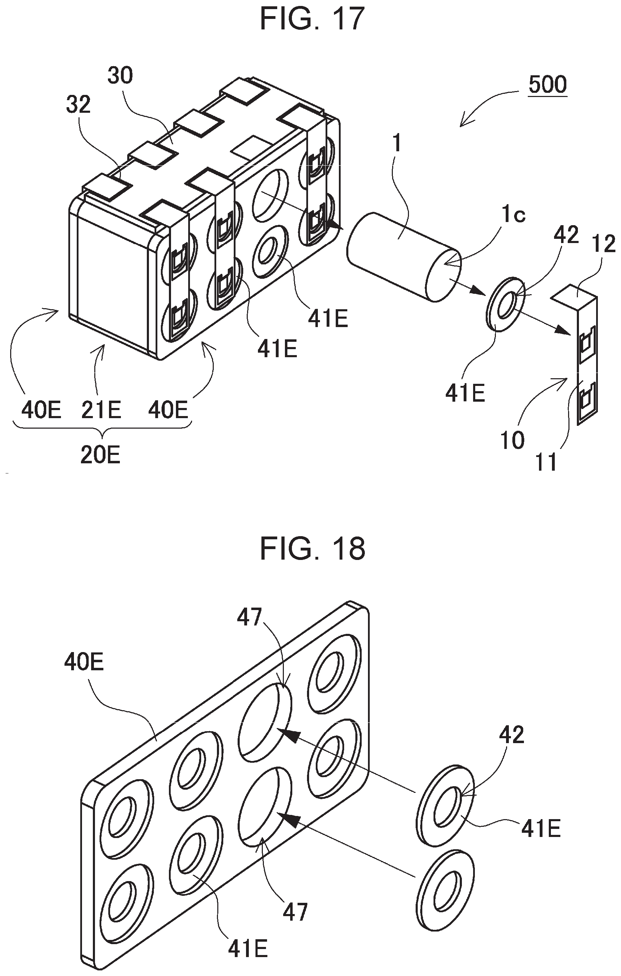

As illustrated in Fig. 16, in this battery pack 500, sub-holders 41E as separate members are fixed to windows 47 of lid holder 40E, end faces of secondary battery cells 1 are pressed and held in storage cylinders 26, and are fixed to fixing pieces 14 of lead plate 10 through electrode windows 42. To remove secondary battery cell 1 to be replaced, as illustrated in Fig. 17, lead plate 10 to which secondary battery cell 1 to be replaced is connected is removed, and then sub-holder 41E is removed. This makes it possible to pull out, through window 47, secondary battery cell 1 to be replaced. In this configuration, since sub-holder 41E is disposed for each secondary battery cell 1, it is sufficient to remove only sub-holder 41E corresponding to secondary battery cell 1 to be replaced, and it is not necessary to remove other sub-holders 41E.

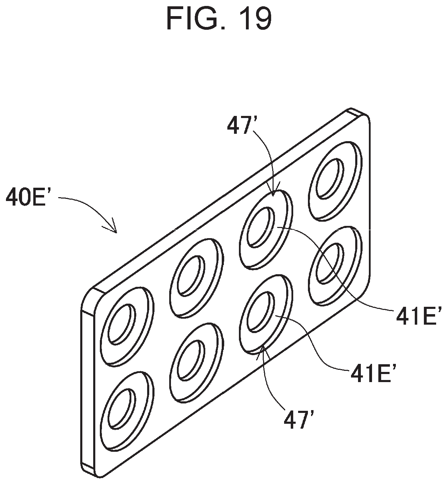

In the example illustrated in Fig. 18, sub-holders 41E are separate members from lid holder 40E, but the present disclosure is not limited to this configuration, and the sub-holders may be formed integrally with the lid holder. For example, in lid holder 40E' of a battery pack according to a modification illustrated in Fig. 19, a portion corresponding to cell end face 1c of secondary battery cell 1 is a breakable thin region. This thin region serves as a breakable sub-holder. That is, the thin region corresponding to cell end face 1c of secondary battery cell 1 to be replaced is broken to open window 47, and secondary battery cell 1 can be removed and inserted. Further, after the insertion, sub-holder 41E' as a separate member is fitted and fixed to window 47'. With this configuration, lid holder 40E' in which the sub-holders are integrally molded in advance can be easily configured. Further, at the time of taking out secondary battery cell 1, it is possible to remove secondary battery cell 1 by breaking and separating only the thin region of the portion where secondary battery cell 1 to be replaced is stored while facilitating the assembling work and the like with lid holder 40E' integrated.

### [Sixth exemplary embodiment]

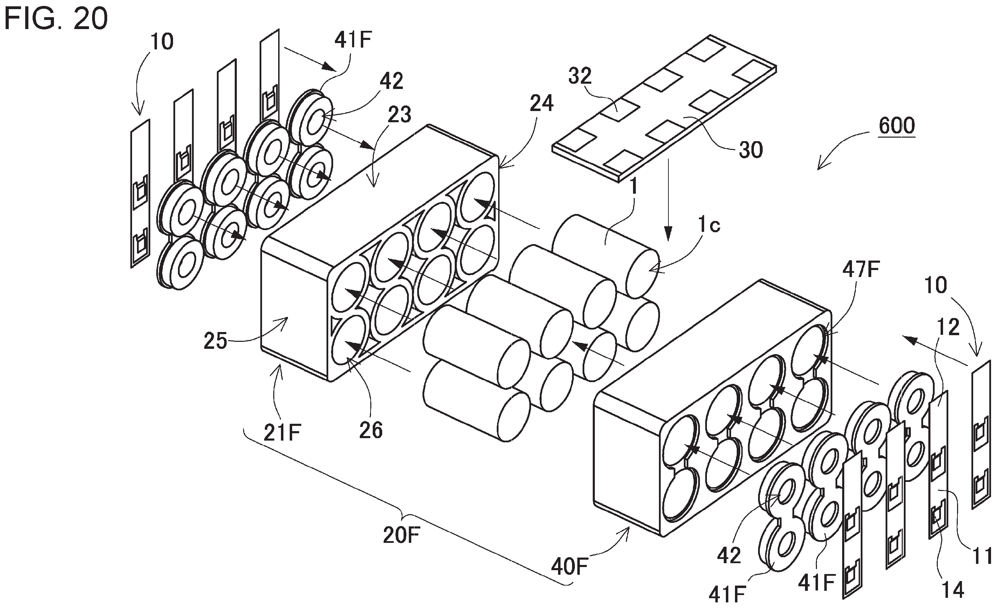

In the above-described exemplary embodiments, the example in which the sub-holder is individually provided for each secondary battery cell has been described, but the present disclosure is not limited to this configuration, and the sub-holder may be provided for each of a plurality of secondary battery cells as in the first embodiment and the like. Such an example is illustrated in Fig. 20 as a battery pack 600 according to a sixth exemplary embodiment. Also in this drawing, the same members as those in the first exemplary embodiment and the like described above are denoted by the same reference marks, and detailed description thereof is appropriately omitted.

In battery pack 600 illustrated in Fig. 20, battery holder 20F includes two components, main body holder 21F and one lid holder 40F. Similarly to Fig. 8 and the like, main body holder 21F and lid holder 40F are each formed to have a width of about 1/2 of the length of secondary battery cell 1. Lid holder 40F is provided with windows 47F corresponding to the plurality of secondary battery cells 1. In the example illustrated in Fig. 20, a circular shape slightly larger than cell end faces 1c of two vertically adjacent secondary battery cells 1 is opened, and windows 47F are opened in an eyeglass shape in which the upper and lower circular shapes communicate with each other. A stepped portion is formed at an opening end of each window 47F. In addition, sub-holder 41F that closes each window 47F is also formed in an eyeglass shape corresponding to eyeglass-shaped window 47F. Furthermore, a flange portion is formed on a peripheral edge of each sub-holder 41F so as to correspond to the stepped portion of window 47F. This makes it possible to engage the flange portion of each sub-holder 41F with the stepped portion of window 47F, and position and hold sub-holder 41F at window 47 of lid holder 40F. For fixing sub-holders 41F and lid holder 40F, a known fixing method such as a precision screw or an adhesive can be appropriately used in addition to press-fitting sub-holders 41F into windows 47.

In each sub-holder 41F, electrode window 42 is opened in a circular portion. Each lead plate 10 is fixed to cell end faces 1c of secondary battery cells 1 through electrode windows 42. With such a configuration, similarly to the first embodiment and the like, it is possible to remove lead plate 10 to which secondary battery cell 1 to be replaced is connected, further remove sub-holder 41F corresponding to this lead plate 10, and replace secondary battery cells 1 connected to removed lead plate 10, including secondary battery cell 1 to be replaced. In addition, in this battery pack 600, sub-holders 41F are configured as separate members from lid holder 40F, but it is needless to say that the sub-holders may be formed integrally with the lid holder, the sub-holders may be formed as a thin region to facilitate breaking, and the windows may be closed by a separately prepared glasses-shaped sub-holder, similarly to the modification illustrated in Fig. 19 described above.

In the above-described example, the battery pack is attached to an electric device to be driven, and power is supplied to the electric device. When the remaining capacity of the battery pack is low or the battery pack degrades over time, the battery pack can be replaced and the electric device can be continuously used. The present disclosure, however, does not limit the battery pack to a replaceable battery pack mainly storing secondary battery cells, and can also be applied to an aspect in which secondary battery cells are stored in a housing of an electric device. In the present disclosure, it is sufficient for the battery pack to store secondary battery cells in a case, and an electric device incorporating a secondary battery cell for driving within a housing of the electric device is included in the battery pack. That is, the present disclosure is not limited to a replaceable battery pack, and can also be applied to an electric device incorporating a secondary battery cell.

### INDUSTRIAL APPLICABILITY

The battery pack and the method for replacing a secondary battery cell thereof according to the present disclosure can be suitably used as a power source for driving a moving body such as an electric cart or an electric scooter. In addition, the power source can be appropriately used as a power source for a wireless device or a power source for a portable electric device such as an electric cleaner or an electric tool.

### REFERENCE MARKS IN THE DRAWINGS

100, 200, 300, 400, 500, 600: battery pack
1, 1A, 1': secondary battery cell; 1c, 1c': cell end face
10, 10', 10A, 10C: lead plate
11: base
12, 12', 12C: lead connection piece
14: fixing piece
20, 20B, 20C, 20D, 20E, 20F: battery holder
21, 21B, 21C, 21D, 21E, 21F: main body holder
22: lead arrangement surface
23: substrate arrangement surface
24: open surface
25: peripheral surface
26: storage cylinder
30: circuit substrate
32: connection region
40, 40B, 40C, 40D, 40E, 40E', 40F: lid holder
41, 41', 41A, 41B, 41C, 41D, 41E, 41E', 41F: sub-holder
42, 42': electrode window
44: holder connecting part
47, 47', 47F: window
900: battery pack
901: secondary battery cell; 901c: cell end face
910: lead plate
920: battery holder
926: first holder
927: second holder
930: circuit substrate

## Claims

1. A battery pack comprising:
a plurality of secondary battery cells each having a cell end face;
a battery holder storing the plurality of secondary battery cells; and
a plurality of lead plates each of which is connected to the cell end face of a corresponding one of the plurality of secondary battery cells stored in the battery holder, wherein
the battery holder includes
a main body holder including a plurality of storage cylinders each of which stores a corresponding one of the plurality of secondary battery cells, the plurality of storage cylinders each having both ends that are opened, and
a lid holder that closes at least a part of an open region of the main body holder,
the lid holder is configured to be separable into a plurality of sub-holders,
each of the plurality of sub-holders has an electrode window that is opened to partially expose the cell end face of a corresponding one of the plurality of secondary battery cells, and
the cell end face is connected to one of the plurality of lead plates through the electrode window.

2. The battery pack according to Claim 1, wherein
the battery holder holds the plurality of secondary battery cells stacked in a plurality of stages,
each of the plurality of sub-holders is extended in a stacking direction of the plurality of secondary battery cells, and
the plurality of sub-holders are arranged in a direction intersecting an extending direction of the sub-holders.

3. The battery pack according to Claim 1, wherein the lid holder is a pair of lid holders that respectively close both sides of an open surface of the main body holder.

4. The battery pack according to Claim 1, wherein the battery pack is formed in a size covering exterior cans of the plurality of secondary battery cells in a state where the lid holder and the main body holder are joined.

5. The battery pack according to Claim 1, wherein the lid holder includes a breakable holder connecting part connecting adjacent sub-holders of the plurality of sub-holders.

6. The battery pack according to Claim 1, wherein
the lid holder is configured to be separable into a plurality of portions, as the plurality of sub-holders, each of which corresponds to the cell end face of a corresponding one of the plurality of secondary battery cells, and
each of the plurality of sub-holders is formed to be larger than an outer shape of the cell end face.

7. The battery pack according to Claim 6, wherein the lid holder includes the plurality of sub-holders as breakable thin regions.

8. The battery pack according to any one of Claims 1 to 7, wherein each of the plurality of lead plates includes a region corresponding to the electrode window, the region being bent in a stepwise manner.

9. A method for replacing a secondary battery cell of a battery pack, the method comprising:
a step of preparing a battery pack including
a plurality of secondary battery cells each having a cell end face,
a battery holder storing the plurality of secondary battery cells, and
a plurality of lead plates each of which is connected to the cell end face of a corresponding one of the plurality of secondary battery cells stored in the battery holder,
the battery holder including
a main body holder including a plurality of storage cylinders each of which stores a corresponding one of the plurality of secondary battery cells, the plurality of storage cylinders each having both ends of that are opened, and
a lid holder that closes at least a part of an open region of the main body holder,
the lid holder being configured to be separable into a plurality of sub-holders,
each of the plurality of sub-holders having an electrode window that is opened to partially expose the cell end face a corresponding one of the plurality of secondary battery cells, and
the cell end face being connected to one of the plurality of lead plates through the electrode window;
a step of specifying at least one secondary battery cell to be replaced among the plurality of secondary battery cells;
a step of removing, from the lid holder, a lead plate connected to the at least one secondary battery cell to be replaced among the plurality of lead plates, and separating, from the lid holder, a sub-holder to which the removed lead plate is fixed among the plurality of sub-holders;
a step of removing, from the main body holder, the at least one secondary battery cell to be replaced;
a step of inserting another secondary battery cell into the main body holder instead of the at least one secondary battery cell to be replaced;
a step of fixing another sub-holder to the lid holder instead of the separated sub-holder; and
a step of fixing another lead plate instead of the removed lead plate through the electrode window of the another sub-holder.

10. A battery pack comprising:
a plurality of secondary battery cells each having a cell end face;
a battery holder storing the plurality of secondary battery cells; and
a plurality of lead plates each of which is connected to the cell end face of a corresponding one of the plurality of secondary battery cells stored in the battery holder,
wherein the battery holder includes
a main body holder has an open surface that is opened at both ends, and
a lid holder that closes at least a part of an open surface of the main body holder,
the lid holder includes a plurality of sub-holders,
each of the plurality of sub-holders has an electrode window that is opened to partially expose the cell end face of a corresponding one of the plurality of secondary battery cells, and
the cell end face is connected to one of the plurality of lead plates through the electrode window.

11. The battery pack according to Claim 10, wherein
the battery holder holds the plurality of secondary battery cells stacked in a plurality of stages,
each sub-holder is extended in a stacking direction of the plurality of secondary battery cells, and
the plurality of sub-holders are arranged in a direction intersecting the stacking direction of the plurality of secondary battery cells.

12. The battery pack according to Claim 10, wherein the lid holder is a pair of lid holders that respectively close both sides of the open surface of the main body holder.

13. The battery pack according to Claim 10, wherein the battery pack is formed in a size covering exterior cans of the plurality of secondary battery cells in a state where the lid holder and the main body holder are joined.

14. The battery pack according to Claim 10, wherein the lid holder includes a holder connecting part that connects a plurality of portions, each of which corresponds to the cell end face of a corresponding one of the plurality of secondary battery cells, such that the plurality of portions are separated as the plurality of sub-holders.

15. A method for replacing a secondary battery cell of a battery pack, the method comprising:
a step of preparing a battery pack including
a plurality of secondary battery cells each having a cell end face,
a battery holder storing the plurality of secondary battery cells, and
a plurality of lead plates each of which is connected to the cell end face of a corresponding one of the plurality of secondary battery cells stored in the battery holder,
the battery holder including
a main body holder having an open surface that is opened at both ends, and
a lid holder that closes at least a part of the open surface of the main body holder,
the lid holder including a plurality of sub-holders,
each of the plurality of sub-holders having an electrode window that is opened to partially expose the cell end face of a corresponding one of the plurality of secondary battery cells, the cell end face being connected to one of the plurality of lead plates through the electrode window;
a step of specifying at least one secondary battery cell to be replaced among the plurality of secondary battery cells;
a step of removing a lead plate connected to the at least one secondary battery cell to be replaced among the plurality of lead plates, and separating, from the lid holder, a sub-holder on which the lead plate is disposed among the plurality of sub-holders;
a step of removing, from the main body holder, the at least one secondary battery cell to be replaced;
a step of inserting another secondary battery cell into the main body holder instead of the at least one secondary battery cell to be replaced;
a step of fixing another sub-holder having a same shape as the sub-holder to the lid holder; and
a step of fixing another lead plate instead of the removed lead plate to the cell end face through the electrode window of the another sub-holder.
